# EUROPÄISCHE PATENTSCHRIFT

(11) **EP 2 115 338 B1**
(45) Veröffentlichungstag und Bekanntmachung des Hinweises auf die Patenterteilung: **22.06.2011**
(21) Anmeldenummer: 07857021.5
(22) Anmeldetag: 20.12.2007
(51) Int. Cl.: F16L 1/028, E21B 7/20, E02F 5/10

(54) **Verfahren zur Verlegung von Rohrleitungen im Boden**
Method for laying pipes in the ground
Procédé de pose de conduites dans le sol

(30) Priorität: 29.12.2006 DE 102006062098
(43) Veröffentlichungstag der Anmeldung: 11.11.2009
(60) Teilanmeldung: 10015273.5
(73) Patentinhaber: Herrenknecht AG, 77963 Schwanau (DE)
(72) Erfinder: KÖGLER, Rüdiger, 26670 Nordgeorgsfehn (DE)
(74) Vertreter: Wetzel, Philipp
(86) Internationale Anmeldenummer: PCT/EP2007/011298
(87) Internationale Veröffentlichungsnummer: WO 2008/080572

(56) Entgegenhaltungen:
- EP-A- 0 345 945
- EP-A- 1 167 681
- WO-A-93/12366
- US-A- 3 011 278
- US-A- 3 011 278
- US-A- 4 448 567
- US-A- 4 650 370
- US-A- 4 650 370
- US-A1- 2002 066 214
- US-B1- 6 183 163

## Beschreibung

Die vorliegende Erfindung betrifft ein Verfahren zur Verlegung von Rohrleitungen im Boden.

### Stand der Technik

Die Verlegung von Rohrleitungen (Pipelines) im Boden hat sich seit Jahrzehnten praktisch nicht verändert. In der Regel wird zunächst der Mutterboden abgetragen und seitlich gelagert, dann werden die zu verlegenden Rohre in Einzellängen von ca. 12 - 16 m in die Trasse ausgefahren, dort miteinander verschweißt und die Nahtstellen gegen Korrosion umhüllt. Danach wird - falls erforderlich - eine Grundwasserabsenkung durchgeführt und anschließend der Rohrgraben ausgehoben. Im nächsten Arbeitsschritt werden die verschweißten Rohrstränge durch so genannte Seitenbäume oder Seilbagger angehoben und in den Rohrgraben abgesenkt Häufig wird dann zusätzlich zu dem Produktrohr (z.B. für den Öl- oder Gastransport) ein so genanntes Kabelschutzrohr im gleichen Rohrgraben verlegt, in das später Steuer- und Signalkabel zur Überwachung der Pipeline eingezogen werden. In einem weiteren Arbeitsschritt wird die Grundwasserhaltung zurückgebaut, danach kann der Rohrgraben verfüllt werden. Abschließend wird der Mutterboden wieder aufgetragen und die Trasse rekultiviert.

Der geschilderte Arbeitsablauf ist zeit- und kostenintensiv und ist neben massiven Eingriffen in die Natur (Zerstörung des Bodenaufbaus, Grundwasserabsenkung, Emissionen durch intensiven Maschineneinsatz) auch mit erheblichen Gefahren für die dort eingesetzten Arbeiter verbunden (schwebende Lasten, Arbeiten in Rohrgraben etc.).

Bei kleineren Rohrleitungen (Durchmesser < 400 mm) lässt sich der maschinentechnische Aufwand in der Regel auf kleinere Baumaschinen (Rad- oder Kettenbagger, Schweißgeräte auf PKW-Anhängern etc.) beschränken. Für diese kleineren Rohrleitungsdurchmesser setzt sich auch zunehmend eine "halb-offene" Verlegung durch, bei der die Rohrleitung mittels spezieller Pflüge in den Boden eingebracht wird. Für diese aus ökologischer Sicht vorteilhafte Methode gibt es jedoch Begrenzungen hinsichtlich des maximalen Außendurchmessers (z.Z. < 400 mm) und des Rohrmaterials (geeignet sind z.B. PE und Guss, nicht bzw, nur eingeschränkt einsetzbar sind Stahlrohre, da sie nur größere elastischen Krümmungsradien zulassen).

Bei der Verlegung großer (Stahl)-Rohrleitungen (Durchmesser > 400 mm) ist der intensive Einsatz von großen Erdbewegungsmaschinen (Bagger, Raupe, Radlader), mobilen Schweißstationen (Schweißraupen, Schweißunimogs etc.) sowie von schweren Geräten zum Bewegen der Einzelrohre bzw. der verschweißten Rohrstränge (Lastkraftwagen, Seitenbäume, Seilbagger) erforderlich. Hiermit verbunden sind entsprechende Auswirkungen auf die Umwelt, was gerade in der heutigen Zeit zunehmend schon während der Genehmigungsphase von Pipelineprojekten zu großen Problemen führen kann und des weiteren während der Bauausführung oftmals zu einer geringen Akzeptanz bei den betroffenen Anwohnern oder Grundstückseigentümem führt (z.B. Landwirte).

Neben den geschilderten Bauverfahren im offenen Rohrgraben bzw. im halboffenen Verfahren werden in ökologisch besonders sensiblen Trassenabschnitten heute zu Tage häufig auch grabenlose Bauweisen wie die Horizontalbohrtechnik oder der Rohrvortrieb eingesetzt. Diese sind jedoch in der Regel wesentlich zeit- und kostenintensiver als die konventionellen Verlegemethoden, so dass der Einsatz dieser Techniken auf ganz spezielle Trassenabschnitte beschränkt bleibt. Darüber hinaus gibt es für diese Bauweisen auch besondere technische Restriktionen zum Beispiel hinsichtlich des Baugrunds oder der Bohrungslänge.

WO 93/12366 A offenbart ein Verfahren und eine Vorrichtung zum Steuern einer Rohrleitung beim Einbringen derselben. Dabei wird ein Verdrängungskopf mit einem Schwert, das aus dem Boden herausragt, vor der Rohrleitung angeordnet. Unterstützend kann davor ein Bohrkopf vorgesehen werden. Mittels eines Hydraulikzylinders wird die Rohrleitung in den Boden gedrückt. An Hand des Pfluges kann festgestellt werden, wo sich die Rohrleitung befindet. Zum Steuern ist es möglich, mit einem Fahrzeug durch Bewegen des oberirdischen Teiles des Schwertes zu ändern. Gemäß der Offenbarung des Dokuments 1 wird dieses Verfahren und diese Vorrichtung in weichem Untergrund von gleichförmiger Qualität eingesetzt.

### Technische Aufgabe

### Der vorliegenden Erfindung liegt deshalb die Aufgabe zu Grunde, eine Verlegemethode sowie dazu benötigte Vorrichtungen zu entwickeln, bei deren Einsatz die Verlegung großer (> 400 mm) Rohrleitungen (auch aus Stahl) mit geringer Beeinträchtigung der Umwelt und hoher Arbeitssicherheit für das eingesetzte Personal bei gleichzeitig großer Verlegeleistung (Zeit- und Kostenvorteil) ermöglicht wird.

### Lösung der technischen Aufgabe

Diese Aufgabe wird gelöst durch ein Verfahren mit den Merkmalen des Anspruchs 1. Vorteilhafte Ausgestaltungen der Erfindung ergeben sich aus den Unteransprüchen.

Bei dem Verfahren wird von einem an der Geländeoberfläche befindlichen Verlegefahrzeug ein im Boden befindlicher Bohrkopf über eine vertikale Verbindungsvorrichtung mit den erforderlichen Steuer- und Versorgungsleitungen verbunden. Sobald sich das Verlegefahrzeug in Trassenrichtung bewegt, wird von der vertikalen Verbindungsvorrichtung - deren Aufbau in weichen Böden etwa demjenigen der Kabelpflüge entspricht und in felsigen Böden zusätzlich eine Fräskette wie z.B. bei Grabenfräsen vorsieht - lediglich ein schmaler Schlitz von etwa 100 - 200 mm Breite erstellt. Gleichzeitig wird vom Bohrkopf ein Bohrloch erstellt, das heißt der anstehende Boden wird gelöst und (vorzugsweise ebenfalls durch die vertikale Verbindungsvorrichtung) nach übertage gefördert. Der Durchmesser des Bohrkopfes ist geringfügig größer als derjenige der zu verlegenden Rohrleitung bzw. eines Hüllrohrs und kann dabei bis zu 1.500 mm Durchmesser und mehr aufweisen. Gleichzeitig ist der Durchmesser des Bohrkopfes wesentlich größer als die maximale Breite der Verbindungsvorrichtung im Bereich des Bodens.

Zur Überwindung der während des Bohr- und Verlegevorgangs auftretenden Kräfte (z.B. Andruckkraft für Bohrkopf, Reibungskräfte an der Rohrleitung etc.) wird das Verlegefahrzeug - ggf. in Koppelung mit weiteren Zugfahrzeugen - und/oder eine Vorschubeinrichtung in der Startgrube eingesetzt. Bei letzterer handelt es sich vorzugsweise um eine auch als Pipe Thruster bekannte Maschine, die von außen über Reibschluss Vorschubkräfte auf eine Rohrleitung übertragen kann, ohne dabei die Umhüllung der Rohrleitung zu zerstören.

Die exakte Steuerung des Bohrkopfes und damit die endgültige Position der Rohrleitung im Boden können auf mehrere Arten erfolgen. Zum Einen kann die vertikale Verbindungsvorrichtung über entsprechende Vorrichtungen mit dem Verlegefahrzeug verbunden sein (ähnlich den Aufreißern an Raupen oder den Auslegern von Baggern), so dass kontrollierte Steuerimpulse über die vertikale Verbindungsvorrichtung direkt auf den Bohrkopf übertragen werden können, wodurch dessen Position im Boden in dreidimensionaler Weise geändert werden kann. Zum Anderen können in einer bevorzugten Ausführungsvariante im Bohrkopf Steuerzylinder angebracht werden, die direkt eine Richtungsänderung des Bohrkopfes - analog der Steuerung von Rohrvortriebsmaschinen - durchführen können oder die Steuerung des Bohrkopfes wird durch Steuerelemente im bzw. am Bohrkopf ausgeführt. Ebenfalls ist möglich, dass die Steuerung des Bohrkopfes über die Verbindungsvorrichtung durch Steuerelemente am Verlegefahrzeug ausgeführt wird.

Die exakte Position des Verlegefahrzeugs kann entweder über GPS erfolgen oder aber auch mittels Lasersystemen, wie sie auch heute schon bei Erdarbeiten eingesetzt werden.

Eine weitere Lehre der Erfindung sieht vor, dass die Rohrleitung in einem Stück an der Geländeoberfläche vorgefertigt und auf Rollenböcken gelagert wird. Alternativ ist vorteilhaft, dass die Rohrleitungen in der Startgrube während des Verlegevorgangs aus Einzelrohren gefertigt wird. Ebenfalls ist vorteilhaft, dass der Bohrkopf an einem Hüllrohr befestigt ist, in dem sich mindestens ein Teil der Rohrleitung befindet und diese Rohrleitung unabhängig von der Bewegung des Hüllrohrs im Hüllrohr bzw. im Boden bewegt werden kann und dabei durch das Hüllrohr geführt wird.

Weiterhin ist vorteilhaft, dass simultan mit dem Bohrvorgang ein Kabelschutzrohr oberhalb der Rohrleitung verlegt wird.

### Vorteile der Erfindung

Die wesentlichen Vorteile gegenüber der konventionellen Rohrverlegung im offenen Rohrgraben sind:
- minimale Beeinträchtigung der Umwelt
   - kleinstmögliche Trassenbreite und somit geringstmöglicher Landverbrauch
   - fast vollständiger Entfall von Grundwasserabsenkungsmaßnahmen (lediglich punktuell im Bereich der Baugruben erforderlich)
   - geringe Emissionen (Lärm, Abgase) durch verminderten Maschineneinsatz
   - keine Zerstörung des natürlichen Bodenaufbaus (Schichtung)
   - minimale Erdbewegungsarbeiten (lediglich Abfuhr des Bohrlochvolumens erforderlich)
   - keine Hindernisse für die Fauna im Trassenbereich (z.B. in Form des Rohrgrabens und des Bodenaushubs)
- optimierter Arbeitsschutz
   - keine Arbeiten in Rohrgräben erforderlich
   - keine Arbeiten unter schwebenden Lasten erforderlich (z.B. beim konventionellen Absenken des Rohrstrangs in den Rohrgraben)
- hohe Akzeptanz bei den Betroffenen Anwohnern
   - schnelle Verlegung und damit kurzer Beeinträchtigungszeitraum
   - geringe physische Beeinträchtigung der betroffenen Grundstücke
   - geringe Emissionen (Lärm, Abgase)
- verbesserte Wirtschaftlichkeit
   - hohe Verlegeleistung bei gleichzeitig verringertem Maschinen- und Personaleinsatz und weniger "Nebenleistungen" (z.B. geringere Nutzungsgebühren für den Arbeitsstreifen wegen verringerter Trassenbreite etc.)
   - geringerer Investitionsbedarf wegen verkleinertem Maschinenpark

Die wesentlichen Vorteile gegenüber der halboffenen Rohrverlegung mittels Pflug (in verdrängunsgfähigem Boden) sind:
- Erweiterung des technischen Einsatzspektrums
   - Verlegung auch großer (Stahl)-Rohre (> 400 mm) möglich
   - Einsatz auch in felsigem Boden möglich

Die wesentlichen Vorteile gegenüber der halboffenen Rohrverlegung mittels Grabenfräse (in Fels) sind:
- minimale Beeinträchtigung der Umwelt
   - geringe Emissionen (Lärm, Abgase) durch verminderten Maschineneinsatz
   - keine Zerstörung des natürlichen Bodenaufbaus (Schichtung)
   - minimale Erdbewegungsarbeiten (lediglich Abfuhr des Bohrlochvolumens erforderlich)
   - keine Hindernisse für die Fauna im Trassenbereich (z.B. in Form des Rohrgrabens und des Bodenaushubs)
- optimierter Arbeitsschutz
   - keine Arbeiten in Rohrgräben erforderlich
   - keine Arbeiten unter schwebenden Lasten erforderlich (z.B. beim konventionellen Absenken des Rohrstrangs in den Rohrgraben)
- hohe Akzeptanz bei den Betroffenen Anwohnern
   - schnelle Verlegung und damit kurzer Beeinträchtigungszeitraum
   - geringe physische Beeinträchtigung der betroffenen Grundstücke
   - geringe Emissionen (Lärm, Abgase)
- verbesserte Wirtschaftlichkeit
   - hohe Verlegeleistung bei gleichzeitig verringertem Maschinen- und Personaleinsatz und weniger "Nebenleistungen" (z.B. geringere Nutzungsgebühren für den Arbeitsstreifen wegen verringerter Trassenbreite etc.)
   - geringerer Investitionsbedarf wegen verkleinertem Maschinenpark Zeichnungen

Das erfindungsgemäße Verfahren sowie dabei einsetzbare Vorrichtungen werden anhand von Zeichnungen dargestellt und nachfolgend erläutert, wobei die dort gezeigten Merkmale beispielhaften Charakter aufweisen. Die Zeichnungen zeigen:
- Fig. 1a - 1f:: Beispielhafter Einsatz des erfindungsgemäßen Verfahrens zur Verle- gung einer in einem Stück vorbereiteten Rohrleitung in einfachen Bo- denverhältnissen.
- Fig. 2a - 2e:: Beispielhafter Einsatz des erfindungsgemäßen Verfahrens zur Verle- gung einer aus Einzelrohren während der Verlegung montierten Rohrlei- tung in einfachen Bodenverhältnissen.
- Fig. 3a - 3g:: Beispielhafter Einsatz des erfindungsgemäßen Verfahrens zur Verle- gung einer aus Einzelrohren während der Verlegung montierten Rohrlei- tung in schwierigen Bodenverhältnissen.
- Fig. 4a - 4b:: Beispielhafte Darstellung der beim Einsatz des erfindungsgemäßen Ver- fahrens einsetzbaren Vorrichtungen bei gleichzeitiger Verlegung eines Kabelschutzrohrs.
- Fig. 5a - 5b:: Beispielhafte Darstellung der unterschiedlichen Trassenbreiten bei Ein- satz des konventionellen Verlegeverfahrens im offenen Rohrgraben so- wie des erfindungsgemäßen Verfahrens.

### Ausführungsbeispiele

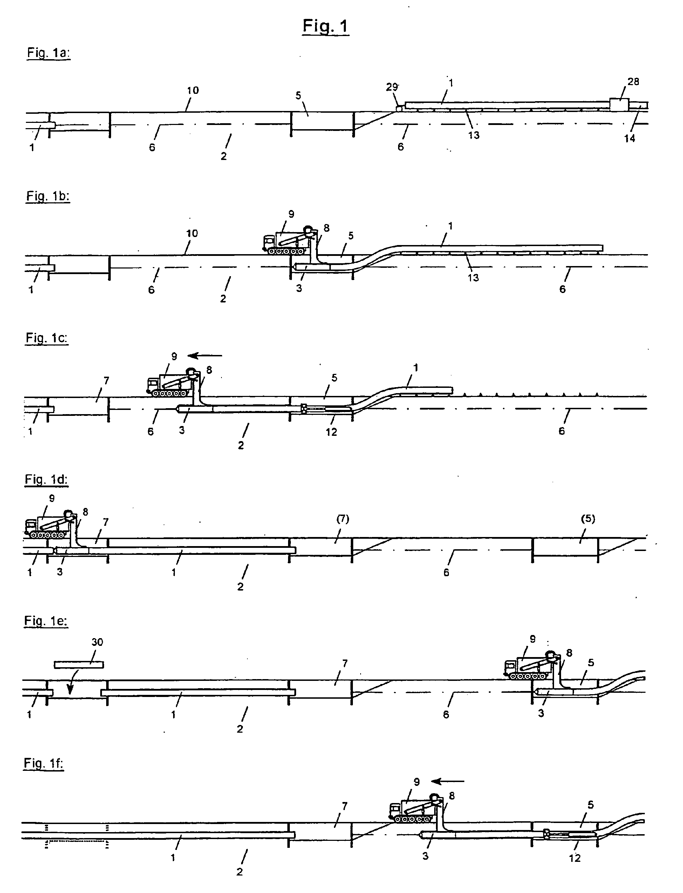

In Fig. 1 ist die prinzipielle Einsatzmöglichkeit des erfindungsgemäßen Verfahrens sowie dabei einsetzbarer Vorrichtungen gezeigt, wobei diese Variante vorzugsweise dann zum Einsatz kommen soll, wenn eine hohe Bohrgeschwindigkeit wegen günstiger Bodenbedingungen erreicht werden kann und die für die Verlegung vorgesehenen Rohre lange Koppelungszeiten erforderlich machen. Diese Konstellation ergibt sich beispielsweise bei der Verlegung großer, dickwandiger Stahlrohre in sandigem Boden.

Fig. 1 a: Zunächst wird die Rohrleitung 1 an der Geländeoberfläche 10 vorbereitet. Dies kann zum Beispiel so erfolgen, dass an einer zentralen Schweißstation 28 die Einzelrohre 14 miteinander verbunden werden und die so nach und nach verlängerte Rohrleitung 1 von einer Winde 29 auf die über der Verlegelinie 6 aufgestellten Rollenböcke 13 gezogen wird. Parallel zu diesem Arbeitsschritt kann die Startgrube 5 erstellt werden.

Fig. 1 b: Anschließend kann das Verlegefahrzeug 9 mit der vertikalen Verbindungsvorrichtung 8 sowie dem Bohrkopf 3 an der Startgrube 5 positioniert und mit der im elastischen Bogen zugeführten Rohrleitung 1 verbunden werden.

Fig. 1c: Das Verlegefahrzeug 9 bewegt sich sodann über der Verlegelinie 6 entlang in Richtung Zielgrube 7, wobei die für den Bohr- und Verlegevorgang erforderlichen Kräfte (Andruckkraft für den Bohrkopf 3, Reibung an der Rohrleitung 1) zunächst alleine vom Verlegefahrzeug 9 aufgebracht werden. Je nach Kraftbedarf kann optional eine Vorschubeinrichtung 12 in der Startgrube 5 positioniert werden, die zusätzliche Axialkräfte in Verlegerichtung auf die Rohrleitung 1 aufbringt. Die Positionierung des Verlegefahrzeugs 9 kann bei hohen Genauigkeitsanforderungen entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen).

Fig. 1d: Nachdem das Verlegefahrzeug 9 an der Zielgrube 7 angekommen ist, wird der Bohrkopf 3 von der Rohrleitung 1 getrennt. Die bisherige Startgrube 5 wird nun zur neuen Zielgrube 7, während gleichzeitig eine neue Startgrube 5 erstellt wird.

Fig. 1e: Die beiden im Boden 2 verlegten Rohrleitungen 1 werden nun im Bereich der bisherigen Zielgrube 7 mittels eines Verbindungsrohrs 30 miteinander verbunden. Das Verlegefahrzeug 9 wird zusammen mit der vertikalen Verbindungsvorrichtung 8 und dem Bohrkopf 3 zur nächsten Startgrube 5 umgesetzt.

Fig. 1f: Nun kann die Rohrverlegung in der in Fig. 1c beschriebenen Art und Weise zwischen der neuen Startgrube 5 und der neuen Zielgrube 7 (ehemals Startgrube 5) erfolgen. Die vorherige Zielgrube 7 wird verfüllt.

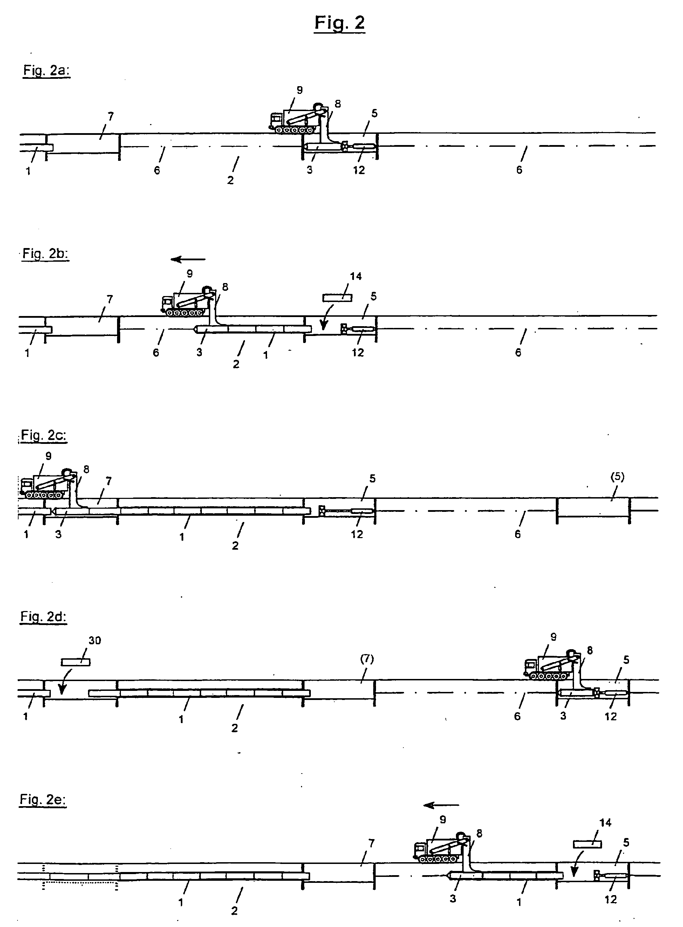

In Fig. 2 ist die prinzipielle Einsatzmöglichkeit des erfindungsgemäßen Verfahrens sowie dabei einsetzbarer Vorrichtungen gezeigt, wobei diese Variante vorzugsweise dann zum Einsatz kommen soll, wenn eine hohe Bohrgeschwindigkeit wegen günstiger Bodenbedingungen erreicht werden kann und die für die Verlegung vorgesehenen Rohre nur kurze Koppelungszeiten erforderlich machen. Diese Konstellation ergibt sich beispielsweise bei der Verlegung von Gussrohren in sandigem Boden.

Fig. 2a: Zunächst wird das Verlegefahrzeug 9 mit der vertikalen Verbindungsvorrichtung 8 sowie dem Bohrkopf 3 an der Startgrube 5 positioniert und die für die Verlegung nicht zugfester bzw. nur gering mit Zugkraft belastbarer Rohre (z.B. Gussrohre mit Muffenverbindung) erforderliche Vorschubeinrichtung 12 in der Startgrube 5 eingebaut.

Fig. 2b: Danach bewegt sich das Verlegefahrzeug 9 über der Verlegelinie 6 entlang in Richtung Zielgrube 7, wobei die für den Bohr- und Verlegevorgang erforderlichen Kräfte (Andruckkraft für den Bohrkopf 3, Reibung an der Rohrleitung 1) zusammen vom Verlegefahrzeug 9 sowie der Vorschubeinrichtung 12 aufgebracht werden. Die Positionierung des Verlegefahrzeugs 9 kann bei hohen Genauigkeitsanforderungen entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen). In der Startgrube 5 werden Einzelrohre 14 nachgesetzt und von der Vorschubvorrichtung 12 in den Boden gepresst. Während des Einlegevorgangs wird der Bohrvorgang kurzfristig unterbrochen.

Fig. 2c: Nachdem das Verlegefahrzeug 9 an der Zielgrube 7 angekommen ist, wird der Bohrkopf 3 von der Rohrleitung 1 getrennt und das Verlegefahrzeug 9 zusammen mit der vertikalen Verbindungsvorrichtung 8 und dem Bohrkopf 3 zur nächsten Startgrube umgesetzt. Die bisherige Startgrube 5 wird nun zur neuen Zielgrube 7.

Fig. 2d: Die beiden im Boden 2 verlegten Rohrleitungen 1 werden nun im Bereich der bisherigen Zielgrube 7 mittels eines Verbindungsrohrs 30 miteinander verbunden. Das Verlegefahrzeug 9 wird zusammen mit der vertikalen Verbindungsvorrichtung 8 und dem Bohrkopf 3 zur nächsten Startgrube 5 umgesetzt.

Fig. 2e: Nun kann die Rohrverlegung in der in Fig. 2b beschriebenen Art und Weise zwischen der neuen Startgrube 5 und der neuen Zielgrube 7 (ehemals Startgrube 5) erfolgen. Die vorherige Zielgrube 7 wird verfüllt.

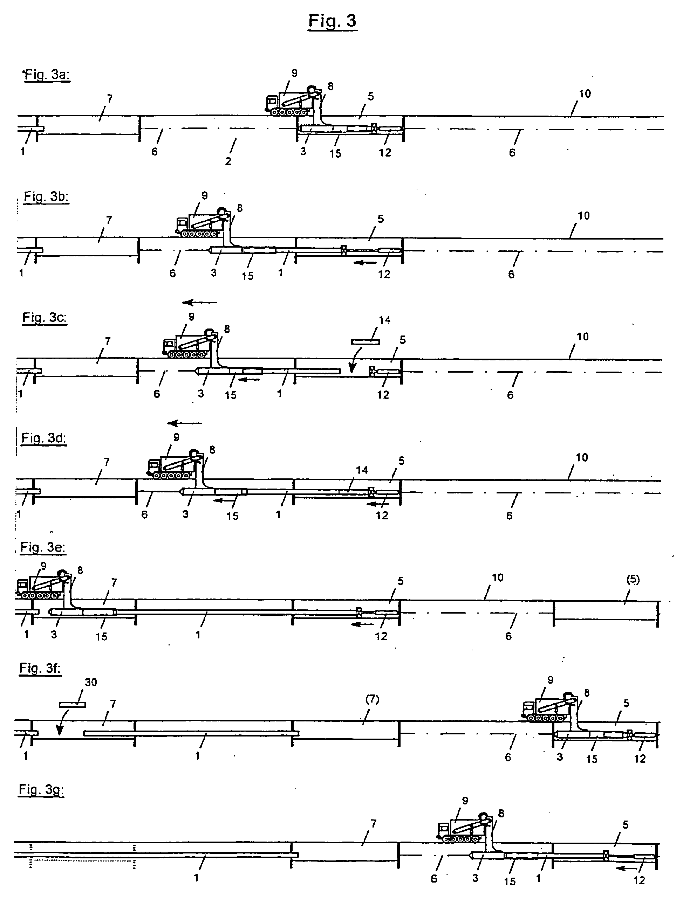

In Fig. 3 ist die prinzipielle Einsatzmöglichkeit des erfindungsgemäßen Verfahrens sowie dabei einsetzbarer Vorrichtungen gezeigt, wobei diese Variante vorzugsweise dann zum Einsatz kommen soll, wenn eine hohe Bohrgeschwindigkeit wegen ungünstiger Bodenbedingungen nicht erreicht werden kann und die für die Verlegung vorgesehenen Rohre lange Koppelungszeiten erforderlich machen. Diese Konstellation ergibt sich beispielsweise bei der Verlegung von Stahlrohren in felsigem Boden.

Fig. 3a: Zunächst wird das Verlegefahrzeug 9 mit der vertikalen Verbindungsvorrichtung 8 sowie dem Bohrkopf 3 und dem Hüllrohr 15 an der Startgrube 5 positioniert und die für den Vorschub der Rohrleitung 1 erforderliche Vorschubeinrichtung 12 in der Startgrube 5 eingebaut.

Fig. 3b: Danach bewegt sich das Verlegefahrzeug 9 über der Verlegelinie 6 entlang in Richtung Zielgrube 7, wobei die für den Bohrvorgang erforderliche Andruckkraft für den Bohrkopf 3 sowie die zur Überwindung der Reibung an dem Hüllrohr 15 erforderliche Kraft vom Verlegefahrzeug 9 und die zur Überwindung der Reibung an der Rohrleitung 1 erforderliche Kraft von der Vorschubeinrichtung 12 aufgebracht werden. Das Hüllrohr kann z.B. die doppelte Länge der Einzelrohre 14 aufweisen. Zu Beginn eines Arbeitszyklus wird nun von der Vorschubeinrichtung 12 die Rohrleitung 1 möglichst weit in das Hüllrohr 15 geschoben. Die Positionierung des Verlegefahrzeugs 9 kann bei hohen Genauigkeitsanforderungen wiederum entweder über GPS oder Laservermessungssystem erfolgen. Die zur Steuerung des Bohrkopfes 3 notwendigen Steuerimpulse können entweder direkt durch das Verlegefahrzeug 9 erzeugt und übertragen werden (z.B. durch Richtungsänderungen oder eine an Hydraulikzylindern geführte vertikale Verbindungsvorrichtung 8) oder aber auch durch Steuerelemente (z.B. Hydraulikzylinder) im Bohrkopf selbst (analog der bekannten Steuerung von Rohrvortriebsmaschinen).

Fig. 3c: Während der Bohrvorgang kontinuierlich weiterläuft und dabei das Hüllrohr 15 langsam in Richtung der Zielgrube 7 über die Rohrleitung 1 bewegt wird, kann gleichzeitig in der Startgrube 5 ein weiteres Einzelrohr 14 mit der Rohrleitung 1 verbunden werden, ohne dass die Rohrleitung 1 sich selbst bewegt. Diese statischen Bedingungen sind z.B. beim Verschweißen von Rohren erforderlich, um die notwendige hohe Qualität der Schweißnähte zu ermöglichen.

Fig. 3d: Der Verbindungsvorgang des Einzelrohrs 14 mit der Rohrleitung 1 ist abgeschlossen, bevor das Hüllrohr 15 vollständig über die Rohrleitung 1 bewegt wurde, so dass die Rohrleitung 1 weiterhin beim erneuten Vorschub durch die Vorschubeinrichtung 12 durch das Hüllrohr 15 geführt werden kann. Dann ist wiederum der in Fig. 3b gezeigte Zustand erreicht und der beschriebene Arbeitszyklus kann wiederholt werden, bis das Verlegefahrzeug 9 an der Zielgrube 7 angekommen ist.

Fig. 3e: Nachdem das Verlegefahrzeug 9 an der Zielgrube 7 angekommen ist, wird der Bohrkopf 3 sowie das Hüllrohr 15 aus der Zielgrube 7 entfernt. Die bisherige Startgrube 5 wird nun zur neuen Zielgrube 7.

Fig. 3f: Die beiden im Boden 2 verlegten Rohrleitungen 1 können nun im Bereich der bisherigen Zielgrube 7 mittels eines Verbindungsrohrs 30 miteinander verbunden werden. Das Verlegefahrzeug 9 wird zusammen mit der vertikalen Verbindungsvorrichtung 8, dem Bohrkopf 3 und dem Hüllrohr 15 an der neuen Startgrube 5 vorbereitet.

Fig. 3g: Nun kann die Rohrverlegung in der in den Fig. 3b bis 3f beschriebenen Art und Weise zwischen der neuen Startgrube 5 und der neuen Zielgrube 7 (ehemals Startgrube 5) erfolgen. Die vorherige Zielgrube 7 wird verfüllt.

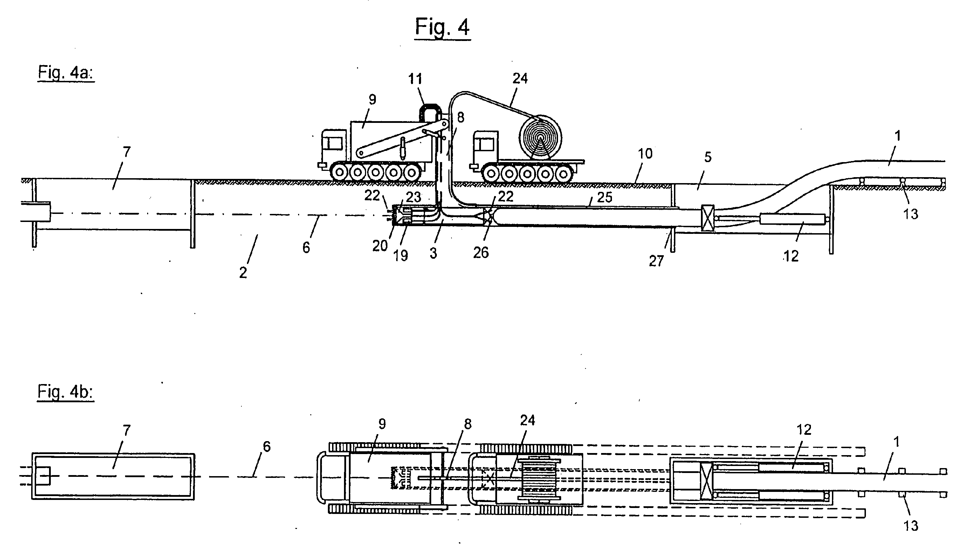

In Fig. 4 ist ein bevorzugter Anwendungsfall dargestellt, bei dem neben der Rohrleitung 1 simultan ein Kabelschutzrohr 24 oberhalb der Rohrleitung 1 mitverlegt wird.

Fig. 4a: In einem bevorzugten Anwendungsfall befindet sich das Kabelschutzrohr 24 aufgetrommelt auf einem separaten Fahrzeug und wird dann während des Verlegevorgangs durch die vertikale Verbindungsvorrichtung 8 oberhalb der Rohrleitung 1 im Boden 2 abgelegt. In einer weiteren bevorzugten Ausführungsform kann die horizontale Verbindungsvorrichtung 26 gelenkig sowie zug- und druckfest ausgelegt werden, wodurch die Steuerbarkeit des Bohrkopfes 3 optimiert wird und gleichzeitig vom Verlegefahrzeug 9 Zugkräfte auf die Rohrleitung 1 übertragen werden können bzw. von der Vorschubeinrichtung 12 Druckkräfte auf den Bohrkopf 3 ausgeübt werden können. Der Antrieb des Schneidrads 20 am Bohrkopf 3 kann über Motor-Getriebe-Einheiten 19 erfolgen, wie sie ebenso wie ein optionaler Brecher 23 zur Zerkleinerung des Bohrkleins im Bohrkopf 3 aus dem Rohrvortrieb bekannt sind. Der vom Schneidrad 20 gelöste Boden wird in einem bevorzugten Anwendungsfall durch die vertikale Verbindungsvorrichtung 8 nach über Tage gefördert und abtransportiert. Der während des Bohr- und Verlegevorgangs entstehende Ringspalt 25 zwischen der Wand des Bohrlochs 4 und der Rohrleitung 1 kann über Düsen 22 im Bohrkopf 3 mit reibungsmindernder Bohrspülung 21 aufgefüllt werden, um die Verlegekräfte zu minimieren und den Schutz der Rohrleitung gegen mechanische Beschädigung zu erhöhen.

Fig. 4b: In einem bevorzugten Anwendungsfall wird die Spurweite des Verlegefahrzeugs 9 so ausgelegt, dass das Verlegefahrzeug 9 über die relativ schmale Startgrube 5 bzw. Zielgrube 7 fahren kann. An der Oberfläche ist für kurze Zeit lediglich der schmale Schlitz zu erkennen, den die vertikale Verbindungsvorrichtung 8 erzeugt.

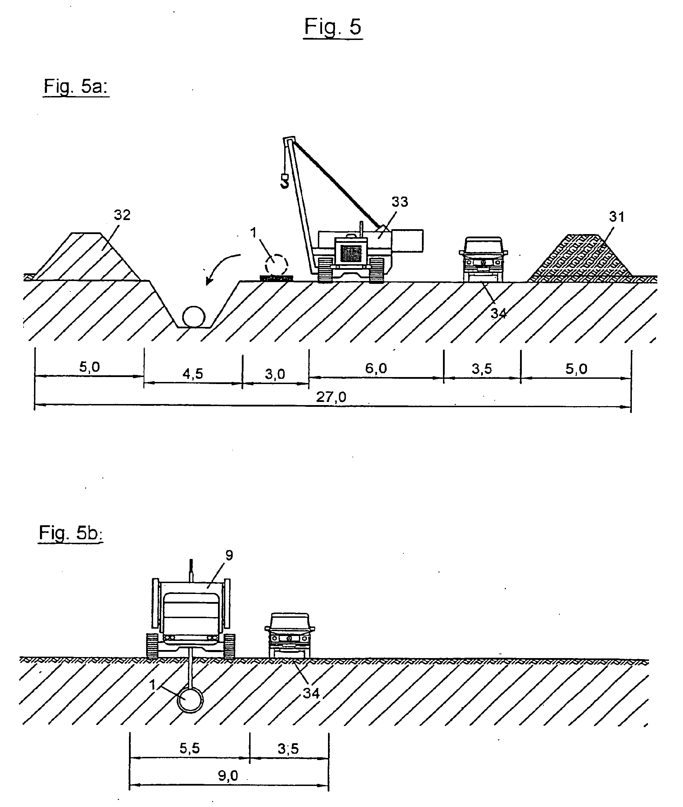

In Fig. 5 zeigt beispielhaft für eine große Stahlleitung den unterschiedlichen Trassenbedarf bei Einsatz der konventionellen Verlegetechnik im offenen Rohrgraben sowie bei Einsatz des erfindungsgemäßen Verfahrens.

Fig. 5a: Bei der konventionellen Rohrverlegung muss zunächst der Mutterboden 31 abgeschoben und separat gelagert werden. Anschließend wird der Rohrgraben ausgehoben und der Aushub 32 ebenfalls seitlich gelagert. Danach wird die Rohrleitung 1 vorbereitet und danach von Rohrverlegern 33 in den Graben abgesenkt. Neben den Rohrverlegern ist eine Fahrspur für Hilfsfahrzeuge 34 vorzusehen. Bei einer Stahlrohrleitung des Durchmessers 1200 mm ist von einer Gesamtbreite der Trasse von etwa 27 m auszugehen.

Fig. 5b: Beim erfindungsgemäßen Verfahren wird für das Verlegefahrzeug 9 ein kleinerer Arbeitsstreifen als für einen Rohrverleger 33 benötigt. Identisch ist demgegenüber der Flächenbedarf für die Fahrspur der Hilfsfahrzeuge 34. Weitere Flächen werden nicht benötigt. Die Gesamtbreite der Trasse beträgt somit beim erfindungsgemäßen Verfahren etwa 9 m und damit nur ein Drittel derjenigen Trassenbreite bei Einsatz des konventionellen Verfahrens.

### Bezugszeichenliste:

- 1: Rohrleitung
- 2: Boden
- 3: Bohrkopf
- 4: Bohrloch
- 5: Startgrube
- 6: Verlegelinie
- 7: Zielgrube
- 8: Vertikale Verbindungsvorrichtung
- 9: Verlegefahrzeug
- 10: Geländeoberfläche
- 11: Steuer-, Ver- und Entsorgungsleitungen
- 12: Vorschubeinrichtung
- 13: Rollenbock
- 14: Einzelrohr
- 15: Hüllrohr
- 16: Steuerelemente am Bohrkopf
- 17: Steuerelemente an der vertikalen Verbindungsvorrichtung
- 18: Steuerelemente am Verlegefahrzeug
- 19: Motor-Getriebe-Einheit
- 20: Schneidrad
- 21: Bohrspülung
- 22: Düsen
- 23: Brecher
- 24: Kabelschutzrohr
- 25: Ringspalt
- 26: Horizontale Verbindungsvorrichtung
- 27: Dichtung
- 28: Schweißstation
- 29: Winde
- 30: Verbindungsrohr
- 31: Mutterboden
- 32: Rohrgrabenaushub
- 33: Rohrverleger
- 34: Fahrspur für Hilfsfahrzeuge

## Patentansprüche

1. Verfahren zum Verlegen von Rohrleitungen im Boden, wobei eine Rohrleitung (1) im Boden (2) verlegt wird, indem von einem Bohrkopf (3) am Anfang einer Rohrleitung (1) ein Bohrloch (4) von einer Startgrube (5) entlang einer Verlegelinie (6) zu einer Zielgrube (7) erstellt wird, der vom Bohrkopf (3) gelöste Boden aus dem Bohrloch (4) entnommen und nach über Tage gefördert wird, der Bohrkopf (3) über eine schmale im Wesentlichen vertikal ausgerichete Verbindungsvorrichtung (8) mit einem Verlegefahrzeug (9) an der Geländeoberfläche (10) verbunden ist, und die erforderliche Kraft für den Bohr- und Verlegevorgang vom Verlegefahrzeug (9) und einer Vorschubeinrichtung (12) in der Startgrube (5) aufgebracht wird, **dadurch gekennzeichnet, dass** Rohrleitungen mit einem Außendurchmesser > 400 mm verlegt werden, und dass die Verbindungsvorrichtung (8) eine Schneidvorrichtung aufweist, die den in Verlegerichtung vor der Verbindungsvorrichtung (8) anstehenden Boden (2) löst und nach über Tage fördert.

2. Verfahren nach Anspruch 1, **dadurch gekennzeichnet, dass** der Bohrkopf (3) ein Schneidrad (20) aufweist, das während des Bohrvorgangs zentrisch um die Verlegelinie (6) rotiert, wobei der vom Bohrkopf (3) gelöste Boden von dem Schneidrad (20) gelöst wird.

3. Verfahren nach Anspruch 1 oder 2, **dadurch gekennzeichnet, dass** die Verbindungsvorrichtung (8) im Bereich des Bodens eine Breite im Bereich von etwa 100 mm bis etwa 200 mm aufweist.

4. Verfahren nach einem der Ansprüche 1 bis 3, **dadurch gekennzeichnet, dass** der vom Bohrkopf (3) gelöste Boden über die Verbindungsvorrichtung (8) nach über Tage gefördert wird.

5. Verfahren nach einem der Ansprüche 1 bis 4 in Verbindung mit Anspruch 2, **dadurch gekennzeichnet, dass** das Schneidrad (20) des Bohrkopfes (3) von mindestens einer im Bohrkopf (3) installierten Motor-Getriebe-Einheit (19) angetrieben wird und/oder am Schneidrad (20) Bohrspülung (21) durch Düsen (22) austritt und/oder hinter dem Schneidrad (20) ein Brecher (23) installiert ist.

6. Verfahren nach einem der Ansprüche 1 bis 5, **dadurch gekennzeichnet, dass** über Düsen (22) am hinteren Ende des Bohrkopfes (3) der Ringspalt (25) um die Rohrleitung (1) mit einer reibungsmindernden Flüssigkeit aufgefüllt wird.

7. Verfahren nach einem der Ansprüche 1 bis 6, **dadurch gekennzeichnet, dass** die Steuerung des Bohrkopfes (3) durch Steuerelemente (17) in bzw. an der Verbindungsvorrichtung (8) ausgeführt wird.

8. Verfahren nach einem der Ansprüche 1 bis 7, **dadurch gekennzeichnet, dass** die für den Betrieb des Bohrkopfes (3) erforderlichen Steuer-, Ver- und Entsorgungsleitungen (11) vom Verlegefahrzeug (9) durch die Verbindungsvorrichtung (8) zum Bohrkopf (3) geführt werden.

9. Verfahren nach einem der Ansprüche 1 bis 8, **dadurch gekennzeichnet, dass** die Verbindungsvorrichtung (8) eine schmale Stahlkonstruktion aufweist, die den in Verlegerichtung vor der Verbindungsvorrichtung (8) anstehenden Boden (2) im Wesentlichen seitlich verdrängt.

10. Verfahren nach einem der Ansprüche 1 bis 9, **dadurch gekennzeichnet, dass** eine horizontale Verbindungsvorrichtung (26) als flexible Verbindung vorgesehen ist, die den Bohrkopf (3) und die Rohrleitung (1) bzw. den Bohrkopf (3) und das Hüllrohr (15) zug- und druckfest miteinander verbindet.

11. Verfahren nach einem der Ansprüche 1 bis 10, **dadurch gekennzeichnet, dass** nach Beginn des Bohr- und Verlegevorgangs der Ringspalt (25) zwischen Bohrloch (4) und Rohrleitung (1) gegenüber der Startgrube (5) gegen Flüssigkeitszutritt mittels einer Dichtung (27) abgedichtet wird.

## Claims

1. Method for laying pipelines in the ground, a pipeline (1) being laid in the ground (2) in that a drill-hole (4) is produced along a laying line (6), from a starting pit (5) to a target pit (7), by a drilling head (3) at the start of a pipeline (1), the soil dislodged by the drilling head (3) is removed from the drill-hole (4) and conveyed to the surface, the drilling head (3) is connected to a laying vehicle (9) on the ground surface (10) via a narrow connecting device (8), which is aligned substantially vertically, and the force required for the drilling and laying operation is applied by the laying vehicle (9) and by a feed device (12) in the starting pit (5), **characterized in that** pipelines are laid with an outer diameter of > 400 mm, **in that** the connecting device (8) has a cutting device, which dislodges the soil (2) to be worked in front of the connecting device (8) in the direction of laying, and conveys it to the surface.

2. Method according to Claim 1, **characterized in that** the drilling head (3) has a cutting wheel (20) that rotates centrically about the laying line (6) during the drilling operation, the soil dislodged by the drilling head (3) being dislodged by the cutting wheel (20).

3. Method according to Claim 1 or 2, **characterized in that**, in the region of the ground, the connecting device (8) has a width in the range of approximately 100 mm to approximately 200 mm.

4. Method according to any one of Claims 1 to 3, **characterized in that** the soil dislodged by the drilling head (3) is conveyed to the surface via the connecting device (8).

5. Method according to any one of Claims 1 to 4 in combination with Claim 2, **characterized in that** the cutting wheel (20) of the drilling head (3) is driven by at least one engine transmission unit (19) installed in the drilling head (3), and/or drilling fluid (21) emerges through nozzles (22) at the cutting wheel (20), and/or a breaker (23) is installed behind the cutting wheel (20).

6. Method according to any one of Claims 1 to 5, **characterized in that** the annular gap (25) around the pipeline (1) is filled with a friction-reducing fluid, via nozzles (22) at the rear end of the drilling head (3).

7. Method according to any one of Claims 1 to 6, **characterized in that** the control of the drilling head (3) is effected through control elements (17) in or on the connecting device (8).

8. Method according to any one of Claims 1 to 7, **characterized in that** the control, supply and removal lines (11) required for operation of the drilling head (3) are routed from the laying vehicle (9), through the connecting device (8), to the drilling head (3).

9. Method according to any one of Claims 1 to 8, **characterized in that** the connecting device (8) is of a narrow, steel construction, which displaces substantially sideways the soil (2) to be worked in front of the connecting device (8) in the direction of laying.

10. Method according to any one of Claims 1 to 9, **characterized in that** there is provided, as a flexible connection, a horizontal connecting device (26) that connects the drilling head (3) and the pipeline (1), or the drilling head (3) and the covering pipe (15), to one another so as to be resistant to tensile force and pressure.

11. Method according to any one of Claims 1 to 10, **characterized in that**, after commencement of the drilling and laying operation, the annular gap (25) between the drill-hole (4) and the pipeline (1) is sealed against the admission of fluid, in respect of the starting pit (5), by means of a seal (27).

## Revendications

1. Procédé de pose de canalisations dans le sol, dans lequel une canalisation (1) est posée dans le sol (2), en ce qu'une tête de perçage (3) forme un trou de perçage (4) au début d'une canalisation (1) depuis une fosse de départ (5) le long d'une ligne de pose (6) jusqu'à une fosse cible (7), le sol détaché par la tête de perçage (3) est retiré du trou de perçage (4) et transporté à la surface, la tête de perçage (3) est reliée à un véhicule de pose (9) sur la surface du terrain (10) par un dispositif de liaison (8) étroit dirigé essentiellement verticalement, et la force nécessaire pour la procédure de perçage et de pose est fournie par le véhicule de pose (9) et un dispositif d'avancement (12) dans la fosse de départ (5), **caractérisé en ce que** des canalisations avec un diamètre extérieur > 400 mm sont posées et **en ce que** le dispositif de liaison (8) présente un dispositif de coupe qui détache le sol (2) présent devant le dispositif de liaison (8) dans le sens de pose et le transporte à la surface.

2. Procédé selon la revendication 1, **caractérisé en ce que** la tête de perçage (3) présente une mollette de découpe (20) qui tourne de manière centrée sur la ligne de pose (6) pendant la procédure de perçage, dans lequel le sol détaché par la tête de perçage (3) est détaché de la mollette de découpe (20).

3. Procédé selon la revendication 1 ou 2, **caractérisé en ce que** le dispositif de liaison (8) présente au niveau du sol une largeur dans la plage d'environ 100 mm à environ 200 mm.

4. Procédé selon l'une des revendications 1 à 3, **caractérisé en ce que** le sol détaché par la tête de perçage (3) est transporté à la surface par le dispositif de liaison (8).

5. Procédé selon l'une des revendications 1 à 4 en lien avec la revendication 2, **caractérisé en ce que** la mollette de découpe (20) de la tête de perçage (3) est entraînée par au moins une unité motoréductrice (19) installée dans la tête de perçage (3) et/ou du fluide de perçage (21) sort par des buses (22) sur la mollette de découpe (20) et/ou un concasseur (23) est installé derrière la mollette de découpe (20).

6. Procédé selon l'une des revendications 1 à 5, **caractérisé en ce que** la fente annulaire (25) autour de la canalisation (1) est remplie d'un liquide réduisant le frottement par des buses (22) sur l'extrémité arrière de la tête de perçage (3).

7. Procédé selon l'une des revendications 1 à 6, **caractérisé en ce que** la commande de la tête de perçage (3) est effectuée par des éléments de commande (17) dans respectivement sur le dispositif de liaison (8).

8. Procédé selon l'une des revendications 1 à 7, **caractérisé en ce que** les conduits de commande, d'alimentation et d'évacuation (11) nécessaires pour le fonctionnement de la tête de perçage (3) sont dirigés par le véhicule de pose (9) à travers le dispositif de liaison (8) jusqu'à la tête de perçage (3).

9. Procédé selon l'une des revendications 1 à 8, **caractérisé en ce que** le dispositif de liaison (8) présente une construction en acier étroite qui déplace essentiellement latéralement le sol (2) présent devant le dispositif de liaison (8) dans le sens de pose.

10. Procédé selon l'une des revendications 1 à 9, **caractérisé en ce qu'**un dispositif de liaison horizontal (26) est prévu en tant que liaison flexible, laquelle relie entre elles la tête de perçage (3) et la canalisation (1) respectivement la tête de perçage (3) et la gaine (15) à l'épreuve de la traction et de la pression.

11. Procédé selon l'une des revendications 1 à 10, **caractérisé en ce qu'**après le commencement de la procédure de pose et de perçage, la fente annulaire (25) entre le trou de perçage (4) et la canalisation (1) est étanchéifiée au moyen d'un joint (27) contre la pénétration de liquide par rapport à la fosse de départ (5).
